# EUROPÄISCHE PATENTSCHRIFT

(11) **EP 1 457 301 B1**
(45) Veröffentlichungstag und Bekanntmachung des Hinweises auf die Patenterteilung: **28.11.2007**
(21) Anmeldenummer: 04002748.4
(22) Anmeldetag: 07.02.2004
(51) Int. Cl.: B29C 45/14, B65D 25/20, G06K 19/077, G06K 19/04

(54) **Behälter aus Kunststoff mit integriertem Transponder**
Plastic container with integrated transponder
Récipient en plastique avec transpondeur intégré

(30) Priorität: 08.03.2003 DE 10310238
(43) Veröffentlichungstag der Anmeldung: 15.09.2004
(73) Patentinhaber: bekuplast Kunststoffverarbeitungs-GmbH, 49824 Ringe (DE)
(72) Erfinder: Roelofs, Wilhelm, 49824 Ringe (DE)
(74) Vertreter: Linnemann, Winfried

(56) Entgegenhaltungen:
- WO-A-01/00493
- DE-A- 10 220 502
- DE-U- 9 205 652
- FR-A- 2 717 593
- FR-A- 2 798 362

## Beschreibung

Die vorliegende Erfindung betrifft einen Behälter aus Kunststoff, wobei der Behälter durch Spritzgießen hergestellt ist und einen integrierten Transponder aufweist, wobei der Transponder in einer vorgefertigten Kunststoffumhüllung liegt, mit der zusammen er als Einlegeteil in das Kunststoffmaterial des Behälters bei dessen Herstellung eingespritzt ist, wobei die Kunststoffumhüllung des Transponders durch einen Stapel von miteinander verbundenen, einen Transponderchip und eine damit verbundene Transponderantenne einschließenden Folienlagen gebildet ist, wobei die Transponderantenne als Flachantenne ausgeführt ist, wobei das eingespritzte Einlegeteil oberflächenbündig in einer Wand oder einem Boden des Behälters liegt und wobei zumindest die mit dem Behälter flächig in Kontakt stehende Folienlage aus einem mit dem Material des Behälters kompatiblen, sich mit diesem im Spritzvorgang verbindenden Material besteht.

Kunststoffbehälter mit einem Transponder sind aus DE-U-92 05 652 und aus WO-A-93/24381 bekannt. Beide Dokumente zeigen Kunststoffbehälter, die mit einem integrierten Transponder ausgestattet sind. Hier sind die Transponder jeweils in einem eigenen Kunststoffgehäuse untergebracht, das einteilig oder zweiteilig ausgebildet ist und das eine im Verhältnis zu seiner Fläche große Dicke aufweist.

Zur Unterbringung dieses Transponders und seines Gehäuses muss deshalb der Kunststoffbehälter entweder schon mindestens einen Bereich relativ großer Dicke aufweisen oder er muss für die Aufnahme des Transponders mit einem verdickten Bereich ausgestattet werden. In den meisten Fällen ist eine Verdickung im Bereich eines Kunststoffbehälters unerwünscht oder sogar so störend, dass sie nicht vorgesehen werden kann, so dass die Anwendbarkeit dieser bekannten Lösungen beschränkt ist. Aus WO-A-93/24381 ist außerdem bekannt, dass die Transponderantenne oval gestaltet werden kann.

Weiterhin ist aus EP-B-0 922 555 ein Kunststoffbehälter bekannt, der mit einem Einsatzelement ausgestattet ist, das beim Spritzen des Kunststoffbehälters eingespritzt ist. Dieses Einsatzelement kann eine elektronische Datenverarbeitungseinheit sein. Wesentlich ist bei diesem Einsatzelement, dass es rahmenförmig, also mit einer Durchbrechung im Bereich seiner Fläche ausgeführt ist. Diese Durchbrechung sorgt für eine formschlüssige und damit besonders sichere Verbindung des Einsatzelements mit dem übrigen Behälter. Nachteilig ist hier aber, dass die gewählte Rahmenform die Ausgestaltung des Einsatzelements und der darin vorgesehenen elektrischen oder elektronischen Komponenten der Datenverarbeitungseinheit erheblich einschränkt.

Aus DE-A-199 09 065 ist ein Verfahren zum Einspritzen eines elektronischen Chips in ein Spritzgußteil, insbesondere einen Müllbehälter, bekannt. Das Einspritzverfahren ist hier gezielt so gestaltet, dass der Chip allseitig in das Material, aus dem das Spritzgussteil besteht, eingebettet und so vollständig eingeschlossen wird. Als nachteilig wird hier angesehen, dass das Spritzverfahren und die dafür verwendete Spritzform sehr aufwendig und dadurch teuer sind und dass anschließend mit dem bloßen Auge nicht mehr feststellbar ist, an welcher Stelle sich ggf. der elektronische Chip in dem Spritzgussteil befindet.

Aus WO-A-01/00493 ist ein weiterer Behälter der eingangs genannten Art aus Kunststoff mit integriertem Transponder bekannt. Bei diesem Behälter ist die Kunststoffumhüllung des Transponders durch einen Stapel von miteinander verbundenen, den Transponderchip und die damit verbundene Transponderantenne einschließenden Folienlagen gebildet. Die Transponderantenne ist eine Flachantenne. Das eingespritzte Einlegeteil liegt oberflächenbündig in einer Wand des Behälters und die mit dem Behälter flächig in Kontakt stehende Folienlage besteht aus einem mit dem Material des Behälters kompatiblen, sich mit diesem im Spritzvorgang verbindenden Material. Im fertigen Zustand des Behälters liegt der Transponderchip zwischen einer Seitenwand des Behälters und einem außen an der Seitenwand angebrachten Etikett oder Druckbild. Durch das Etikett oder Druckbild ist der Transponderchip gegen äußere Einwirkungen, insbesondere Feuchtigkeit geschützt. Bei Ausführung des Behälters ohne das Etikett oder Druckbild würde dieser Schutz aber entfallen, wodurch dann der Transponderchip anfälliger gegen Schäden, insbesondere durch Feuchtigkeit, wird.

Für die vorliegende Erfindung stellt sich deshalb die Aufgabe, einen Behälter der eingangs genannten Art zu schaffen, der die aufgeführten Nachteile vermeidet und bei dem insbesondere für die Unterbringung des Transponders nur so wenig Platz benötigt wird, dass Änderungen am Behälter für die Unterbringung des Transponders nicht erforderlich werden, bei dem eine sichere Funktion und gute Reichweite beim Lesen und/oder Beschreiben des Transponders durch eine externe Lese-/Schreibstation gewährleistet ist, bei dem eine sichere und dauerhafte Verbindung des Transponders mit dem übrigen Behälter erreicht wird und bei dem die Möglichkeit besteht, die Lage des Transponders im Behälter optisch erkennbar zu machen.

Die Lösung dieser Aufgabe gelingt erfindungsgemäß mit einem Behälter der eingangs genannten Art, der dadurch gekennzeichnet ist,
- dass die die Transponderantenne bildende Flachantenne mit oval, rund, elliptisch oder rechteckig mit stark abgerundeten Ecken in der Ebene der Folienlagen verlaufenden Antennenleitern ausgeführt ist und
- dass das Einlegeteil in seinem Umriss eine an die Form der Transponderantenne angepasste, diese radial nach außen für deren Einschluss ausreichend überragende, ovale, runde oder elliptische Form oder rechteckige Form mit stark abgerundeten Ecken hat.

Durch die Ausgestaltung der Kunststoffumhüllung des Transponders in Form eines Stapels von miteinander verbundenen Folienlagen werden eine besonders dünne Konstruktion und damit eine besonders geringe Dicke des Transponders einschließlich seiner Kunststoffumhüllung erreicht. Hierdurch lässt sich der Transponder einschließlich seiner Kunststoffumhüllung in praktisch jeden beliebigen Kunststoffbehälter integrieren, ohne dass am Kunststoffbehälter dafür Veränderungen, beispielsweise Verdickungen eines Wand- oder Bodenbereiches, vorgenommen werden müssten.

Die erfindungsgemäß als Flachantenne mit oval, rund, elliptisch oder rechteckig mit stark abgerundeten Ecken in der Ebene der Folienlagen verlaufenden Antennenleitern ausgeführte Transponderantenne hat eine sehr geringe Dicke, was zu einer geringen Gesamtdicke des Transponders einschließlich seiner Kunststoffumhüllung beiträgt. Gleichzeitig hat eine so ausgebildete Transponderantenne aufgrund ihrer speziellen Form eine besonders große Reichweite bei einer vorgegebenen elektrischen Leistung, wobei die Reichweite etwa 30% größer ist als bei derzeit verfügbaren Transpondern.

Die weiterhin vorgesehene oberflächenbündige Lage des eingespritzten Einlegeteils in einer Wand oder einem Boden des Behälters sorgt dafür, dass Beschädigungen des Einlegeteils und des darin liegenden Transponders durch äußere Einwirkungen weitestgehend ausgeschlossen sind. Eine besonders geringe Beschädigungsgefahr ergibt sich dann, wenn zusätzlich der Bereich, in dem das Einlegeteil im Behälter liegt, von vorspringenden Stegen oder Rippen umgeben ist. Derartige Stege oder Rippen sind an Kunststoffbehältern in der Regel ohnehin vorgesehen, um die Teile des Behälters bei geringem Gewicht besonders belastbar zu machen.

Eine weitere Maßnahme für einen besonders sicheren Sitz des Einlegeteils im Behälter besteht darin, dass zumindest die mit dem Behälter flächig in Kontakt stehende Folienlage aus einem mit dem Material des Behälters kompatiblen, sich mit diesem im Spritzvorgang verbindenden Material besteht. Hierdurch wird erreicht, dass sich im Spritzvorgang beispielsweise eine flächige Schmelzverbindung zwischen dem Material des Behälters und dem Material des Einlegeteils bildet, da das mit hoher Temperatur in die Spritzform eingespritzte Kunststoffmaterial des Behälters für ein ausreichendes Erwärmen und Anschmelzen des Materials der mit dem Behälter in Kontakt stehenden Folienlage des Einlegeteils sorgt. Nach dem Abkühlen des Materials ist die Verbindung dauerhaft fest und eine selbsttätige, ungewollte Trennung ist ausgeschlossen.

Schließlich ist erfindungsgemäß vorgesehen, dass das Einlegeteil in seinem Umriss eine an die Form der Transponderantenne angepasste, diese radial nach außen für deren Einschluss ausreichend überragende, ovale, runde oder elliptische Form oder rechteckige Form mit stark abgerundeten Ecken hat. Die Form des Umrisses des Einlegeteils hat neben der Anpassung an die Antennenform den Vorteil, dass das Einlegeteil während des Spritzvorganges weniger zu Blasenbildung infolge eines unterschiedlichen, richtungsabhängigen Schrumpfens bei der Abkühlung neigt. Gleichzeitig dichtet diese Form des Einlegeteils dieses besser gegen einen Eintritt von Feuchtigkeit zwischen Einlegeteil und Behälter ab, als dies bei einer quadratischen oder rechteckigen, scharfe Ecken aufweisenden Umrissform des Einlegeteils der Fall wäre.

In weiterer Ausgestaltung ist bevorzugt vorgesehen, dass die Folienlagen untereinander durch mindestens eine Kleberschicht verklebt sind. Hierdurch wird ein sicherer Zusammenhalt der Folienlagen gewährleistet, wobei auf dem Markt eine Vielzahl von Klebern mit unterschiedlichen, jeweils für den konkreten Anwendungsfall besonders geeigneten Eigenschaften kostengünstig verfügbar ist.

Besonders bevorzugt ist der Kleber der Kleberschicht ein vernetzender Kleber. Hierdurch wird ein besonders guter und auch über lange Zeit sicherer Zusammenhalt der mit diesem Kleber verklebten Folienlagen gewährleistet, so dass für entsprechend lange Zeit der Transponder mit seinem Transponderchip und seiner Transponderantenne sicher gegen äußere Einflüsse geschützt bleibt und somit dauerhaft funktionstüchtig ist.

In einer einfachen Ausführung des Behälters sind mindestens zwei Folienlagen vorgesehen, wobei die mit dem Behälter flächig in Kontakt stehende Folienlage eine untere Grundfolie bildet und wobei eine zweite, obere Folienlage eine Deckfolie bildet. Auch schon in dieser einfachen Ausführung ist der Transponder zwischen den Folienlagen sicher eingeschlossen und gegen äußere Einwirkungen ausreichend geschützt. Die Herstellung des Einlegeteils bleibt in dieser Ausführung besonders einfach und dadurch kostengünstig.

In weiterer Ausgestaltung ist vorgesehen, dass zwischen der Grundfolie und der Deckfolie eine Trägerfolie als weitere Folienlage angeordnet ist, auf der der Transponderchip und die Transponderantenne angeordnet sind. Hierdurch wird eine eigene Folienlage zur Verfügung gestellt, auf der der Transponderchip und die Antenne befestigt sind.

Bevorzugt ist weiter dabei vorgesehen, dass der Transponderchip und die Transponderantenne auf der vom Behälter abgewandten Oberseite der Trägerfolie angeordnet sind. Hiermit wird insbesondere erreicht, dass der Transponder mit seinem Transponderchip und seiner Transponderantenne besonders gut gegen thermische Einwirkungen beim Spritzvorgang des Behälters geschützt wird, da der Transponder über die Grundschicht und zusätzlich die Trägerschicht, also durch zwei Folienlagen, von dem mit hoher Temperatur in die Spritzform eingespritzten Kunststoffmaterial des Behälters getrennt ist. Hierdurch werden Schäden durch Überhitzung insbesondere des Transponderchips sicher vermieden.

Weiterhin kann auf die Deckfolie eine ein- oder mehrlagige Beschichtung aufgebracht sein, insbesondere um ein Eindringen von Feuchtigkeit aus natürlichen Niederschlägen oder bei einem Waschen des Behälters zwischen Einlegeteil und Behälter zu unterbinden.

Bevorzugt ist dabei die Beschichtung durch eine oder mehrere Lackschichten gebildet. Diese Lackschicht oder Lackschichten können durch einen die gewünschten Dichtungseigenschaften gegen Feuchtigkeit aufweisenden Lack gebildet sein. Außerdem wird durch diese Beschichtung auch die Oberfläche der Deckfolie des Einlegeteils zusätzlich gegen äußere Einwirkungen geschützt.

Eine Weiterbildung des erfindungsgemäßen Behälters sieht vor, dass auf die Deckfolie oder auf die Beschichtung eine mit dem Auge und/oder eine maschinell lesbare Bedruckung aufgebracht werden kann. Diese Bedruckung kann beispielsweise Informationen über den Behälter oder dessen Eigentümer enthalten und/oder eine Werbung darstellen.

Bevorzugt ist dabei die Bedruckung ein Inkjet-, ein Thermotransfer- oder ein Laser-Druck. Hiermit wird eine einerseits dauerhafte und andererseits variable Bedruckung des Einlegeteils ermöglicht. Ein Laser-Druck oder eine Laser-Beschriftung wird durch die auf die Deckfolie aufgebrachte, oben erwähnte Beschichtung möglich, sodass hierfür kein besonderer zusätzlicher Aufwand erforderlich wird.

Falls eine einfache Erkennbarkeit der Lage des Einlegeteils mit dem Transponder gewünscht ist, kann die Deckfolie oder die Beschichtung eine zu dem Material des Behälters kontrastierende Farbe aufweisen.

Falls es gewünscht ist, dass die Lage des Einlegeteils mit dem Transponder äußerlich nicht ohne weiteres erkennbar ist, kann gemäß einer alternativen Ausgestaltung des Behälters die Deckfolie oder die Beschichtung eine mit dem Material des Behälters übereinstimmende Farbe aufweisen.

Schließlich besteht auch noch die Möglichkeit, dass die Folienlagen und, sofern vorhanden auch die Beschichtung, transparent sind. Diese Ausführung ist beispielsweise für Behälter, die ansonsten auch transparent sind, vorteilhaft. Außerdem bietet die Transparenz der Folienlage eine Erkennbarkeit des Transponders mit seinem Transponderchip und seiner Transponderantenne, was bei manchen Anwendungen aus optischen Gründen vorteilhaft ist.

Hinsichtlich der eingesetzten Materialien ist erfindungsgemäß bevorzugt vorgesehen, dass zumindest die mit dem Behälter flächig in Kontakt stehende Folienlage und der Behälter jeweils aus Polyethylen (PE) oder aus Polypropylen (PP) bestehen. Beide Materialien eignen sich sowohl zur Herstellung von Behältern als Spritzgussteile als auch zur Herstellung von Folien, aus denen das Einlegeteil mit dem Transponder gebildet ist. Bei diesen Materialien ist auch gewährleistet, dass sich die gewünschte feste Schmelzverbindung beim Einspritzen des Einlegeteils in der Spritzform für den Behälter bei dessen Herstellung ergibt, da die Wärme des eingespritzten Kunststoffmaterials des Behälters ausreicht, die mit dem Behälter flächig in Kontakt stehende Folienlage des Einlegeteils so weit zu erweichen und anzuschmelzen, dass sich die gewünschte feste Schmelzverbindung ergibt. Die Trägerfolie, auf der der Transponderchip und die Transponderantenne angeordnet sind, besteht beispielsweise aus Polyethylen (PE). Hiermit wird erreicht, dass der Transponderchip und die Transponderantenne mit guter Haftung auf der Trägerfolie befestigt werden können. Gleichzeitig sorgt die Trägerfolie aus Polyethylen für einen guten thermischen Schutz des Transponders beim Spritzen des Behälters.

Zur Erzielung einer rationellen und damit kostengünstigen Herstellbarkeit des Behälters ist vorgesehen, dass das Einlegeteil ein Zuschnitt- oder Stanzteil aus einer Bahn oder einem Bogen ist, die/der eine Vielzahl von vorgefertigten Transpondern enthält.

Hinsichtlich der Nutzung des Transponders ist schließlich bevorzugt vorgesehen, dass in jedem Transponderchip jeweils eine feste, nicht löschbare Information, insbesondere eine individuelle Identifikationsnummer und/oder ein Eigentümer des Behälters, dauerhaft gespeichert ist und eine variable, überschreibbare Information, insbesondere über Inhalt, Absender und/oder Empfänger des Behälters, speicherbar ist.

Im Folgenden wird ein Ausführungsbeispiel der Erfindung anhand einer Zeichnung erläutert. Die Figuren die Zeichnung zeigen:
- Figur 1: einen Ausschnitt aus einer Wand eines Behälters mit einem in ein Einlegeteil integrierten Transponder, in Ansicht
- Figur 2: die Behälterwand mit dem Einlegeteil im Schnitt gemäß der Linie II/II in Figur 2 und
- Figur 3: das in Figur 2 eingekreiste Detail III in vergrößerter Darstellung.

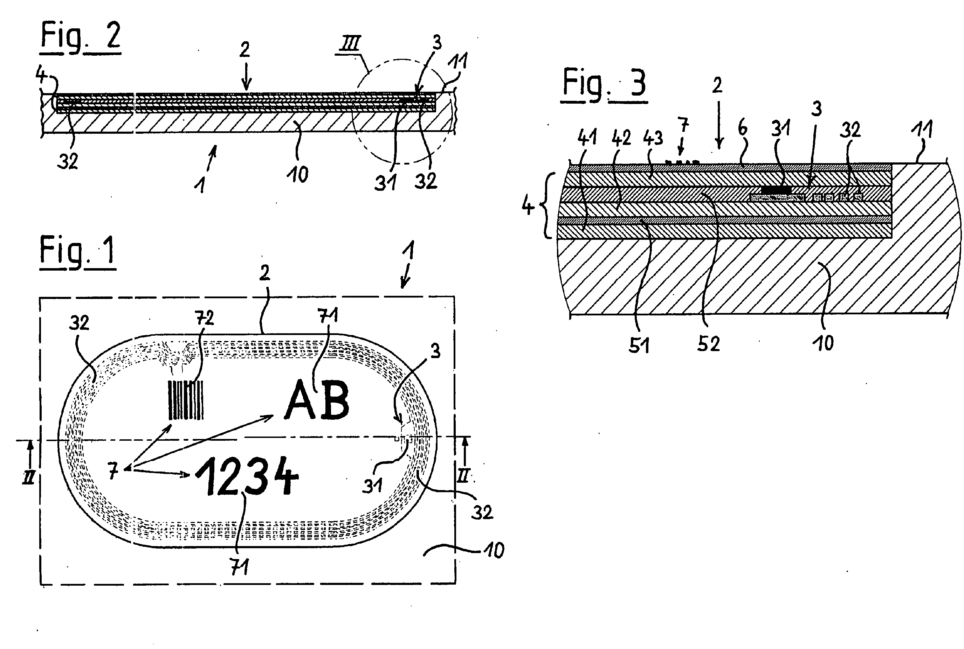

Figur 1 der Zeichnung zeigt einen Blick auf einen Ausschnitt einer Wand 10 eines Behälters 1 aus Kunststoff, wobei der Behälter 1 bzw. seine Wand 10 ein Spritzgussteil ist. In die Wand 10 ist ein Einlegeteil 2 so eingespritzt, dass die dem Betrachter zugewandte Oberseite des Einlegeteils 2 flächenbündig mit der dem Betrachter ebenfalls zugewandten Oberfläche der Wand 10 liegt.

Das Einlegeteil 2 hat hier einen ovalen Umriss und besteht aus mehreren miteinander verklebten Folienlagen, die zusammen einen Folienstapel bilden.

Zwischen den das Einlegeteil 2 bildenden Folienlagen ist ein Transponder 3 eingeschlossen. Dieser Transponder 3 besteht aus einem Transponderchip 31 und einer damit elektrisch verbundenen Transponderantenne 32. Die Antenne 32 hat hier die Form einer Flachantenne mit mehreren in Form von Ovalen verlaufenden metallischen Leitern, z.B. aus Kupfer, Silber, Aluminium, Messing oder einem anderen geeigneten, elektrisch leitfähigen Material. Durch die Ovalform erreicht die Antenne 32 eine verhältnismäßig große Reichweite.

Weiterhin zeigt die Figur 1, dass die dem Betrachter zugewandte Oberseite des Einlegeteils 2 mit einer Bedruckung 7 versehen ist. Diese Bedruckung 7 besteht im dargestellten Ausführungsbeispiel zum Teil aus einer mit dem Auge lesbaren Bedruckung 71 und aus einer maschinenlesbaren Bedruckung 72, hier ein Strichcode. Die Bedruckungen 7 sind zweckmäßig dauerhaft aufgebracht und enthalten vorzugsweise eine Information, die mit einer im Transponderchip 31 gespeicherten oder speicherbaren Information korreliert.

Figur 2 zeigt in der Schnittdarstellung den Schichtenaufbau des Einlegeteils 2. Unten in Figur 2 ist die Wand 10 des Behälters 1 erkennbar, wobei vorzugsweise die in Figur 2 untere Seite der Wand 10 zum Inneren des Behälters 1 weist. Das Einlegeteil 2 liegt dann an der Oberfläche 11 der Wand 10, die zum Behälteräußeren gewandt ist.

Das Einlegeteil 2 ist durch einen Stapel 4 aus mehreren Folienschichten und dazwischen liegenden Kleberschichten gebildet. In diesen Schichtenstapel 4 integriert ist der Transponder 3 mit seinem Transponderchip 31 und seiner Transponderantenne 32. Dabei liegen der Transponderchip 31 und die Antenne 32 so in dem Einlegeteil 2, dass der Transponderchip 31 und die Antenne 32 nach außen hin vollständig abgeschlossen sind.

Weiterhin verdeutlicht die Figur 2, dass das Einlegeteil 2 mit dem Transponder 3 flächenbündig in die Wand 10 des Behälters 1 eingebettet ist, so dass die nach oben weisende Oberseite des Einlegeteils 2 mit der Oberseite 11 der Wand 10 eine glatte, stufenfreie Fläche bildet.

Das Einlegeteil 2 ist rückseitig und umfangsseitig bei der Herstellung des Behälters 1 oder dessen Wand 10 durch einen Spritzvorgang in dessen Material eingebettet und durch eine Schmelzverbindung mit diesem fest und dauerhaft sowie dicht verbunden.

Figur 3 zeigt in vergrößerter Darstellung das Detail III aus Figur 2, wobei nun der Schichtenaufbau deutlicher wird. Es ist darauf hinzuweisen, dass die Dicke der einzelnen Schichten unmaßstäblich, hier übertrieben groß dargestellt ist, um den Schichtenaufbau erkennbar zu machen.

Unten in Figur 3 ist ein Teil der Wand 10 erkennbar. Darüber ist ein Teil des Einlegeteils 2 sichtbar. Die in Figur 3 untere Lage des Einlegeteils 2, die flächig mit dem Material der Wand 10 in Kontakt steht, wird durch eine Grundfolie 41 gebildet. Diese Grundfolie 41 besteht aus einem Material, das mit dem Material der Wand 10 kompatibel ist, idealerweise identisch ist. Hierdurch wird gewährleistet, dass sich im Kontaktbereich zwischen der Wand 10 einerseits und der Unterseite und dem Umfang der Grundfolie 41 andererseits während des Spritzvorganges ohne zusätzliche Maßnahmen eine Verschmelzungszone ausbildet, die für eine dauerhafte und feste Verbindung des Einlegeteils 2 mit der Wand 10 sorgt.

Auf die Grundfolie 41 folgt nach oben hin als weitere Folie eine Trägerfolie 42. Diese Trägerfolie 42 ist mit der Grundfolie 41 durch eine zwischenliegende Kleberschicht 51, vorzugsweise aus einem vernetzenden Kleber, fest und dauerhaft verbunden.

Auf der Oberseite der Trägerfolie 42, die z.B. aus Polyethylen besteht, ist der Transponder 3, bestehend aus Transponderchip 31 und Transponderantenne 32, angeordnet und befestigt. Nach oben hin folgt dann als dritte Folienlage eine Deckfolie 43, die vorzugsweise wieder aus dem gleichen Material besteht wie die Grundfolie 41. Das Material kann hier beispielsweise Polyethylen (PE) oder Polypropylen (PP) sein. Damit ergibt sich auch im Bereich der Deckfolie 43 an deren umlaufender Schmalseite beim Spritzvorgang eine Schmelzverbindung zwischen dem Material der Wand 10 und der Deckfolie 43, wodurch die Einbettung des Einlegeteils 2 in der Behälterwand 10 weiter gefestigt und verbessert und insbesondere abgedichtet wird.

Zwischen der Trägerfolie 42 und der Deckfolie 43 ist eine zweite Kleberschicht 52 angebracht, die für den gewünschten dauerhaften und festen Zusammenhalt zwischen Trägerfolie 42 und Deckfolie 43 sorgt.

Auf die Deckfolie 43 ist beim dargestellten Ausführungsbeispiel noch eine Beschichtung 6 aufgebracht, beispielsweise als Lackschicht. Auf deren Oberseite ist hier die Bedruckung 7 aufgebracht. Die Bedruckung 7 kann alternativ auch unmittelbar auf der Oberseite der Deckfolie 43 liegen und durch eine dann zweckmäßig transparente Beschichtung 6 abgedeckt und gegen Abrieb geschützt sein. Die Beschichtung 6 sorgt außerdem für einen dichten Abschluss des umlaufenden Randes des Einlegeteils 2 gegenüber der Behälterwand 10, sofern hier der dichte Abschluss nicht schon durch die Schmelzverbindung zwischen Grundfolie 41 und Deckfolie 43 einerseits und Behälterwand 20 andererseits ausreichend gewährleistet ist. Insbesondere wird durch die Beschichtung 6 vermieden, dass Feuchtigkeit in den Bereich zwischen Behälterwand 10 und Einlegeteil 2 oder sogar in das Innere des Einlegeteils 2 und in den Bereich des Transponders 3 gelangen kann.

Wie erwähnt, erfolgt das Integrieren des Einlegeteils 2 mit dem Transponder 3 in die Behälterwand 10 während des Spritzens des Behälters 1 in einer Spritzgussform. Zwecks rationeller Fertigung erfolgt zweckmäßig das Einlegen des Einlegeteils 2 in die Spritzform mittels eines Roboters. Das Einlegeteil 2 wird dann in der Spritzform zweckmäßig durch Vakuum an seiner Sollposition gehalten, bis durch Einspritzen von Kunststoffmaterial für die Behälterwand 10 oder den gesamten Behälter 1 das Einlegeteil 2 in die Behälterwand 10 eingebettet ist. Dabei entsteht die oben schon erwähnte Schmelzverbindung zwischen Einlegeteil 2 und Behälterwand 10, die nach dem Abkühlen nicht mehr zerstörungsfrei lösbar ist. Damit ist ein unbefugter Austausch des Transponders 3 bei dem Behälter 1 nicht unbemerkt durchführbar.

## Patentansprüche

1. Behälter (1) aus Kunststoff, wobei der Behälter (1) durch Spritzgießen hergestellt ist und einen integrierten Transponder (3) aufweist, wobei der Transponder (3) in einer vorgefertigten Kunststoffumhüllung liegt, mit der zusammen er als Einlegeteil (2) in das Kunststoffmaterial des Behälters (1) bei dessen Herstellung eingespritzt ist, wobei die Kunststoffumhüllung des Transponders (3) durch einen Stapel (4) von miteinander verbundenen, einen Transponderchip (31) und eine damit verbundene Transponderantenne (32) einschließenden Folienlagen (41, 43) gebildet ist, wobei die Transponderantenne (32) als Flachantenne ausgeführt ist, wobei das eingespritzte Einlegeteil (2) oberflächenbündig in einer Wand (10) oder einem Boden des Behälters (1) liegt und wobei zumindest die mit dem Behälter (1) flächig in Kontakt stehende Folienlage (41) aus einem mit dem Material des Behälters (1) kompatiblen, sich mit diesem im Spritzvorgang verbindenden Material besteht,
**dadurch gekennzeichnet,**
- **dass** die die Transponderantenne (32) bildende Flachantenne mit oval, rund, elliptisch oder rechteckig mit stark abgerundeten Ecken in der Ebene der Folienlagen (41, 43) verlaufenden Antennenleitern ausgeführt ist und
- **dass** das Einlegeteil (2) in seinem Umriss eine an die Form der Transponderantenne (32) angepasste, diese radial nach außen für deren Einschluss ausreichend überragende, ovale, runde oder elliptische Form oder rechteckige Form mit stark abgerundeten Ecken hat.

2. Behälter nach Anspruch 1, **dadurch gekennzeichnet, dass** die Folienlagen (41, 43) untereinander durch mindestens eine Kleberschicht (51) verklebt sind.

3. Behälter nach Anspruch 2, **dadurch gekennzeichnet, dass** der Kleber der Kleberschicht (51) ein vernetzender Kleber ist.

4. Behälter nach einem der vorhergehenden Ansprüche, **dadurch gekennzeichnet, dass** mindestens zwei Folienlagen (41, 43) vorgesehen sind, wobei die mit dem Behälter (1) flächig in Kontakt stehende Folienlage (41) eine untere Grundfolie bildet und wobei eine zweite, obere Folienlage (43) eine Deckfolie bildet.

5. Behälter nach Anspruch 4, **dadurch gekennzeichnet, dass** zwischen der Grundfolie (41) und der Deckfolie (43) eine Trägerfolie (42) als weitere Folienlage angeordnet ist, auf der der Transponderchip (31) und die Transponderantenne (32) angeordnet sind.

6. Behälter nach Anspruch 5, **dadurch gekennzeichnet, dass** der Transponderchip (31) und die Transponderantenne (32) auf der vom Behälter (1) abgewandten Oberseite der Trägerfolie (42) angeordnet sind.

7. Behälter nach einem der Ansprüche 4 bis 6, **dadurch gekennzeichnet, dass** auf die Deckfolie (42) eine ein- oder mehrlagige Beschichtung (6) aufgebracht ist.

8. Behälter nach Anspruch 7, **dadurch gekennzeichnet, dass** die Beschichtung (6) durch eine oder mehrere Lackschichten gebildet ist.

9. Behälter nach Anspruch 7 oder 8, **dadurch gekennzeichnet, dass** auf die Deckfolie (43) oder auf die Beschichtung (6) eine mit dem Auge und/oder eine maschinell lesbare Bedruckung (7) aufgebracht ist.

10. Behälter nach Anspruch 9, **dadurch gekennzeichnet, dass** die Bedruckung (7) ein Inkjet-, ein Thermotransfer- oder ein Laser-Druck ist.

11. Behälter nach einem der Ansprüche 8 bis 10, **dadurch gekennzeichnet, dass** die Deckfolie (43) oder die Beschichtung (6) eine zu dem Material des Behälters (1) kontrastierende Farbe aufweist.

12. Behälter nach einem der Ansprüche 8 bis 10, **dadurch gekennzeichnet, dass** die Deckfolie (43) oder die Beschichtung (6) eine mit dem Material des Behälters (1) übereinstimmende Farbe aufweist.

13. Behälter nach einem der Ansprüche 5 bis 10, **dadurch gekennzeichnet, dass** die Folienlagen (41, 42, 43) und, sofern vorhanden auch die Beschichtung (6), transparent sind.

14. Behälter nach einem der vorhergehenden Ansprüche, **dadurch gekennzeichnet, dass** zumindest die mit dem Behälter (1) flächig in Kontakt stehende Folienlage (41) und der Behälter (1) jeweils aus Polyethylen (PE) oder aus Polypropylen (PP) bestehen.

15. Behälter nach einem der vorhergehenden Ansprüche, **dadurch gekennzeichnet, dass** das Einlegeteil (2) ein Zuschnitt- oder Stanzteil aus einer Bahn oder einem Bogen ist, die/der eine Vielzahl von vorgefertigten Transpondern (3) enthält.

16. Behälter nach einem der vorhergehenden Ansprüche, **dadurch gekennzeichnet, dass** in jedem Transponderchip (31) jeweils eine feste, nicht löschbare Information, insbesondere eine individuelle Identifikationsnummer und/oder ein Eigentümer des Behälters (1), dauerhaft gespeichert ist und eine variable, überschreibbare Information, insbesondere über Inhalt, Absender und/oder Empfänger des Behälters (1), speicherbar ist.

## Claims

1. Container (1) of plastic, the container (1) being produced by injection molding and having an integrated transponder (3), the transponder (3) being in a prefabricated plastic covering, together with which the transponder is injected as an insert (2) into the plastic material of the container (1) while the latter is being produced, the plastic covering of the transponder (3) being formed by a stack (4) of film layers (41, 43), which are connected with one another and enclose a transponder chip (31) and a therewith connected transponder antenna (32), the transponder antenna (32) being constructed as a flat antenna, the injected insert (2) lying flush with the surface in a wall (10) or in the bottom of the container (1) and at least the film layer (41), which is in two-dimensional contact two-dimensionally with the container, consists of a material, which is compatible with the material of the container, with which it connects during the injection molding process,
**characterized in that**
- the flat antenna, forming the transponder antenna (32), is constructed with oval, round, elliptical or rectangular corners, which are heavily rounded off, antenna conductors, extending in the plane of the film layers (41, 43) and
- that the insert (2), in its outline, has an oval, round or elliptical shape or a rectangular shape with heavily rounded corners, adapted to the shape of the transponder antenna (32), protruding the latter radially towards the outside adequately for their inclusion.

2. The container of claim 1, **characterized in that** layers of film (41, 42) are glued to one another by ad least one layer of adhesive (51).

3. The container of claim 4, **characterized in that** the adhesive of the adhesive layer (51) is a cross-linked adhesive.

4. The container of one of the preceding claims, **characterized in that** at least two film layers (41, 43) are provided, the film layer (41), which is in two-dimensional contact with the container (1), forming a lower basic film and a second, upper film layer (43) forming a covering film.

5. The container of claim 4, **characterized in that** a support film (42), on which the transponder chip (31) and the transponder antenna (32) are disposed, is disposed as a further film layer between the basic film (41) and the covering film (43).

6. The container of claim 5, **characterized in that** the transponder chip (31) and the transponder antenna (32) disposed on the upper side of the support film (42), which is averted from the container (1).

7. The container of one of the claims 4 to 6, **characterized in that** a single layer or multilayer coating (6) is applied on the covering film (42).

8. The container of claim 7, **characterized in that** the coating (6) is formed by one or more layers of lacquer.

9. The container of claims 7 or 8, **characterized in that** printed matter (7), which can be read by the naked eye and/or by machine, is applied on the covering film (43) or on the coating (6).

10. The container of claim 9, **characterized in that** the printed matter (7) is printed by an ink jet, thermal transfer or laser printing system.

11. The container or one of the claims 8 to 10, **characterized in** the covering film (43) or the coating (6) has a color, contrasting with that of the material of the container (1).

12. The container of one of the claims 8 to 10, **characterized in that** the covering film (43) or the coating (6) has a color, which is identical with that of the material of a container (1).

13. The container of one of the claims 5 to 10, **characterized in that** the film layers (41, 42, 43) and, if present, also the coating (6) are transparent

14. The container of one of the preceding claims, **characterized in that** at least the film layer (41) in two-dimensional contact with the container (1), and the container (1) each consists of polyethylene (PE) or of polypropylene (PP).

15. The container of one of the preceding claims, **characterized in that** the insert (2) is a part, which is cut or stamped from a sheet, which contains a plurality of pre-manufactured transponders (3).

16. The container of one of the preceding claims, **characterized in that** information, especially an individual identification number and/or an owner of the container (1) is stored permanently and non-erasably in each transponder chip (31) and that variable information, which can be overwritten, especially concerning the contents, sender and/or recipient of the container (1) can be stored in each transponder chip (31).

## Revendications

1. Récipient (1) en matière plastique, le récipient (1) étant fabriqué par moulage par injection et comportant un transpondeur intégré (3), le transpondeur (3) se trouvant dans une enveloppe en matière plastique préfabriquée, avec laquelle il est injecté conjointement en tant qu'insert (2) dans la matière plastique du récipient (1) lors de la fabrication de celui-ci, l'enveloppe en matière plastique du transpondeur (3) étant constituée par une pile (4) de couches de feuilles (41, 43) reliées entre elles et renfermant une puce de transpondeur (31) et une antenne de transpondeur (32) qui y est reliée, l'antenne de transpondeur (32) étant réalisée sous la forme d'une antenne plate, l'insert injecté (2) étant situé dans une paroi (10) ou un fond du récipient (1) avec la surface desquels il est aligné et au moins la couche de feuille (41) en contact plan avec le récipient (1) se composant d'une matière compatible avec la matière du récipient (1) et s'assemblant avec celle-ci dans l'opération d'injection,
**caractérisé en ce que**
- l'antenne plate qui constitue l'antenne de transpondeur (32) est réalisée avec des conducteurs d'antenne dont le tracé dans le plan des couches de feuilles (41, 43) est ovale, circulaire, elliptique ou rectangulaire avec des coins fortement arrondis et
- l'insert (2) a un contour de forme ovale, ronde ou elliptique ou de forme rectangulaire avec des coins fortement arrondis, adaptée à la forme de l'antenne de transpondeur (32) et dépassant radialement celle-ci de manière suffisante vers l'extérieur pour la renfermer.

2. Récipient selon la revendication 1, **caractérisé en ce que** les couches de feuilles (41, 43) sont collées entre elles par au moins une couche de colle (51).

3. Récipient selon la revendication 2, **caractérisé en ce que** la colle de la couche de colle (51) est une colle qui se réticule.

4. Récipient selon l'une des revendications précédentes, **caractérisé en ce qu'**au moins deux couches de feuilles (41, 43) sont prévues, la couche de feuille (41) en contact plan avec le récipient (1) constituant une feuille de base inférieure, et une deuxième couche de feuille supérieure (43) constituant une feuille de recouvrement.

5. Récipient selon la revendication 4, **caractérisé en ce que** se trouve, entre la feuille de base (41) et la feuille de recouvrement (43), une feuille de support (42) en tant que couche de feuille supplémentaire sur laquelle se trouve la puce de transpondeur (31) et l'antenne de transpondeur (32).

6. Récipient selon la revendication 5, **caractérisé en ce que** la puce de transpondeur (31) et l'antenne de transpondeur (32) se trouvent sur la face supérieure de la feuille de support (42), laquelle face est opposée au récipient (1).

7. Récipient selon l'une des revendications 4 à 6, **caractérisé en ce qu'**un revêtement mono- ou multicouche (6) est appliqué sur la feuille de recouvrement (42).

8. Récipient selon la revendication 7, **caractérisé en ce que** le revêtement (6) est constitué par une ou plusieurs couches de vernis.

9. Récipient selon la revendication 7 ou 8, **caractérisé en ce qu'**une impression (7) lisible à l'oeil et/ou à la machine est appliquée sur la feuille de recouvrement (43) ou sur le revêtement (6).

10. Récipient selon la revendication 9, **caractérisé en ce que** l'impression (7) est une impression à jet d'encre, par thermotransfert ou laser.

11. Récipient selon l'une des revendications 8 à 10, **caractérisé en ce que** la feuille de recouvrement (43) ou le revêtement (6) présentent une couleur qui contraste avec la matière du récipient (1).

12. Récipient selon l'une des revendications 8 à 10, **caractérisé en ce que** la feuille de recouvrement (43) ou le revêtement (6) présentent une couleur identique à celle de la matière du récipient (1).

13. Récipient selon l'une des revendications 5 à 10, **caractérisé en ce que** les couches de feuilles (41, 42, 43) et, s'il existe, le revêtement (6), lui aussi, sont transparents.

14. Récipient selon l'une des revendications précédentes, **caractérisé en ce qu'**au moins la couche de feuille (41) en contact plan avec le récipient (1) et le récipient (1) se composent respectivement de polyéthylène (PE) ou de polypropylène (PP).

15. Récipient selon l'une des revendications précédentes, **caractérisé en ce que** l'insert (2) est une pièce découpée ou estampée à partir d'une bande ou d'une feuille qui contient une pluralité de transpondeurs (3) préfabriqués.

16. Récipient selon l'une des revendications précédentes, **caractérisé en ce que**, dans chaque puce de transpondeur (31), respectivement une information fixe et non effaçable, en particulier un numéro d'identification individuel et/ou un propriétaire du récipient (1) est stockée durablement et une information variable remplaçables, en particulier sur le contenu, l'expéditeur et/ou le destinataire du récipient (1), peut être mise en mémoire.
